# EUROPÄISCHE PATENTSCHRIFT

(11) **EP 1 563 209 B1**
(45) Veröffentlichungstag und Bekanntmachung des Hinweises auf die Patenterteilung: **25.01.2012**
(21) Anmeldenummer: 03811374.2
(22) Anmeldetag: 12.11.2003
(51) Int. Cl.: F16J 15/38

(54) **SEKUNDÄRDICHTUNGSELEMENT**
SECONDARY SEALING ELEMENT
ELEMENT D'ETANCHEITE SECONDAIRE

(30) Priorität: 20.11.2002 DE 20217983 U
(43) Veröffentlichungstag der Anmeldung: 17.08.2005
(73) Patentinhaber: EagleBurgmann Germany GmbH & Co. KG, 82515 Wolfratshausen (DE)
(72) Erfinder: DRÖSCHER, Peter, 82538 Geretsried (DE); LANG, Klaus, 82547 Beuerberg (DE); LEDERER, Günther, 82538 Geretsried (DE); NOSOWICZ, Josef, 82538 Geretsried (DE); SCHRÜFER, Andreas, 82515 Wolfratshausen (DE); STEIGENBERGER, Georg, 82541 Münsing (DE); WAIDNER, Peter, 82380 Peissenberg (DE)
(74) Vertreter: Schmidt, Horst
(86) Internationale Anmeldenummer: PCT/EP2003/012659
(87) Internationale Veröffentlichungsnummer: WO 2004/046591

(56) Entgegenhaltungen:
- EP-A- 0 867 647
- DE-U- 29 518 119
- DE-U- 29 612 203

## Beschreibung

Die Erfindung betrifft ein Sekundärdichtungselement sowie eine damit ausgestattete Gleitringdichtungsanordnung.

Die Erfindung betrifft insbesondere ein Sekundärdichtungselement zur Verwendung bei einer Gleitringdichtungsanordnung, die für den Einsatz zur Abdichtung gasförmiger Medien mit hohen bis sehr hohen Drücken ausgelegt ist, wo die Gefahr eines Fliessens oder Extrudierens von Material des Sekundärdichtungselementes in enge abzudichtende Spalte zwischen benachbarten Bauteilen besteht, deren Beweglichkeit relativ zueinander gewährleistet sein muss. Es wurde schon ein Sekundärdichtungselement vorgeschlagen (EP 0867547 A2), das einen Verbundring aus getrennten ersten und zweiten Teilen darstellt, wobei einer der Teiles als Spreizring ausgebildet ist. Der in geeigneter Weise in einem umgebenden Gehäuse einer abzudichtenden Gerätschaft formschlüssig montierbare andere Teil besteht aus einem Kohlefaser-verstärkten PTFE-Kunststoffmaterial. Beide Teile stützen sich an gegenüberliegenden Schrägflächen aneinander ab. Dadurch kann der Kohleffaserverstärkte Teil unter einer axialen Kraft auf den Verbundring mit einer Radialkraft beaufschlagt werden, um einen Ansatzbereich am inneren Umfang dieses Teiles gegen eine abzudichtende Fläche zu pressen und einen Spalt zu schliessen, durch den der weichere Teile extrudiert werden könnte. Bekannt ist es weiter (DE 29518119 U), zur Vermeidung eines derartigen Extrudierens ein starres Stützelement in einem Basisdichtkörper aus einem nachgiebigen Kunststoffmaterial einzubetten bzw. (DE 29612203 U) einen nachgiebigen Dichtring mittels eines solchen Stützringes nach aussen axial abzudecken, so dass ein Zugang zu einem abzudichtenden Spalt praktisch abdeckt und damit das weiche Material des Sekundärdichtungselementes an einem Eintritt in den Spalt gehindert ist. Das starre Stützelement übernimmt keine Dichtfunktion. Diese wird vielmehr ausschliesslich durch den nachgiebigen Basiskörper des bekannten Sekundärdichtungselementes erhalten. Zwar kann mit den bekannten Massnahmen wirksam ein Eindringen von Material der Sekundärdichtungselemente in den abzudichtenden Spalt verhindert werden, doch besteht bei hohen Drücken, insbesondere in Gegenwart erhöhter Temperaturen die Gefahr, dass die Beweglichkeit des abzudichtenden Bauteils der Gerätschaft, bei dem es sich um einen federvorgespannten Gleitring handeln kann, nicht gewährleistet ist. Die Beweglichkeit eines solchen Gleitringes in axialer Richtung ist andererseits eine wesentliche Voraussetzung für dessen Funktionalität und Betriebssicherheit, insbesondere bei der Abdichtung von Gasen. Mangelnde Beweglichkeit kann mannigfache schädliche Auswirkungen haben. Ein weiterer Nachteil des bekannten Sekundärdichtungselementes ist dessen zweiteiligen Ausgestaltung, die für jeden Teil separate Montagemassnahmen an der abzudichtenden Gerätschaft erfordert.

Der Erfindung liegt die Aufgabe zugrunde, ein Sekundärdichtungselement zu schaffen, das zum Einsatz bei von normalen bis zu sehr hohen Drücken und in Gegenwart gasförmiger abzudichtender Medien geeignet ist, indem eine ausreichende Beweglichkeit relativ zueinander beweglicher Bauteile, die mit dem Sekundärdichtungselement gegeneinander abzudichten sind, gewährleistet ist.

Diese Aufgabe wird gemäss einem Aspekt der Erfindung durch ein Sekundärdichtungselement gemäss dem Patentanspruch 1 gelöst. Das Sekundärdichtungselement umfasst einen Basiskörper aus einem Kunststoffmaterial, der einen Basisbereich und einen Dichtungsbereich umfasst, die axial nebeneinander angeordnet sind und koaxial zueinander ausgerichtete Durchgangsbohrungen für die Durchführung eines Bauteils aufweisen, und ein Ringscheibenelement. Das Ringscheibenelement besteht aus einem Kohlenstoffmaterial und hat im entlasteten Zustand eine Durchgangsbohrung mit einer radialen Abmessung, die grösser als diejenige des Dichtungsbereiches ist. Ausserdem ist das Ringscheibenelement in einer Aussparung in einer Stirnseite des Basisbereiches so aufgenommen, dass es die Stirnseite um ein geringes Mass axial überragt. Das Ringscheibenelement ist damit Teil des Basiskörpers, so dass sich teure gesonderte Haltemassnahmen für das Ringscheibenelement an der abzudichtenden Gerätschaft erübrigen. Dies erleichtert nicht nur erheblich die Montage des Sekundärdichtungselementes, sondern schafft auch eine deutlich weniger komplizierte Gesamtanordnung. Bei niedrigen Mediumdrücken wird das Ringscheibenelement praktisch nicht belastet und übernimmt der Dichtungsbereich des Basiskörpers aus dem nachgiebigen Kunststoffmaterial praktisch alleine die Dichtfunktion. Die dabei auftretenden Dichtkräfte lassen sich im Hinblick auf eine gute Beweglichkeit des betreffenen Bauteils (Gleitring) leicht opimieren. Bei höheren Mediumdrücken wird dagegen die Dichtfunktion mehr und mehr auf das Ringdichtungselement verlagert, indem dieses nunmehr in dichtendem Eingriff mit der abzudichtenden Oberfläche gestaucht wird. Dabei wird gleichzeitig ein Spalt zwischen den abzudichtenden Bauteilen geschlossen. Wegen der guten tribologischen Eigenschaften des Kohlenstoffmaterials bleibt die Beweglichkeit des betreffenden. Bauteils (Gleitring) trotz der festen eingreifenden Beziehung zwischen dem Ringdichtungselement und der Oberfläche in einem ausreichenden Masse erhalten. Unter Hochdruckbedingungen kann es sogar zu einer gänzlichen Entlastung des Dichtungsbereiches des nachgiebigen Basiskörpers kommen.

Gemäss einem weiteren Aspekt der Erfindung ist eine Gleiringdichtungsanordnung gemäss dem Patentanspruch 6 vorgesehen, die mit einem Sekundardichtungselement der vorerwähnten Art ausgestattet ist, wobei einer der Gleitringe auf einer Hülse axial beweglich angordnet und dagegen mittels des Sekundardichtungselementes abgedichtet ist. Die Hülse besteht gemäss einem Merkmal der Gleiringdichtungsanordnung aus einem Material, insbesondere verschleissfestem Wolframkarbid, mit einem Wärmeausdehnungskoeffizienten, der im Wesentlichen dem des Kohlenstoffmaterials des Ringichtungselementes des Sekundardichtungselementes entspricht. Dadurch können thermisch bedingte Verspannungen des Ringichtungselementes wirksam vermieden werden, was zur bleibenden Beweglichkeit der Teile einen zusätzlichen Beitrag liefert.

Die Erfindung wird nachfolgend anhand einer Ausführungsform und der Zeichnung näher erläutert. Es zeigen:
Fig. 1 in längsgeschnittener Ansicht eine Gleitringdichtungsanordnung im Zustand der Montage an einer Gerätschaft mit einem Sekundärdichtungselement gemäss einer Ausführungsform der Erfindung, und
Fig.2 das Sekundärdichtungselement nach Fig. 1 in einer vergösserten geschnittenen Detailansicht,

Obschon die Erfindung nachfolgend in Verbindung mit ihrem bevorzugten Einsatz als Sekundärdichtungselement einer Gleitringdichtungsanordnung beschrieben wird, ist sie auf diese Anwendung nicht beschränkt. Vielmehr kann sie vorteilhaft auch dann eingesetzt werden, wenn die Gefahr besteht, dass die zur Abdichtung relativ zueinander beweglicher Bauteile üblicherweise verwendeten Elastomerdichtungen unter höheren Drücken und/oder Temperaturen zerstört werden können.

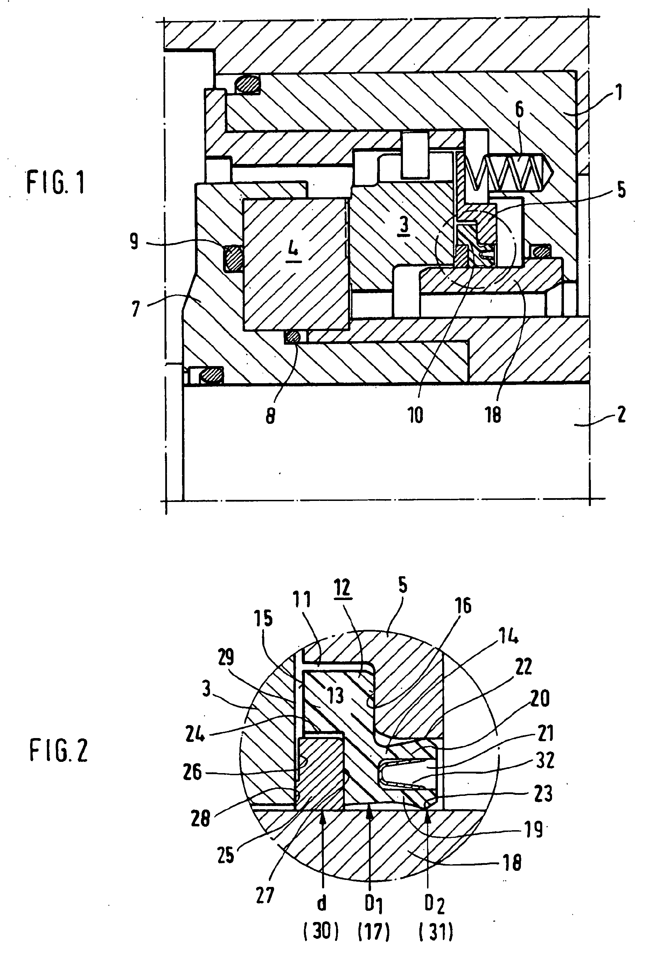

Die Gleitringdichtungsanordnung umfasst, wie in Fig. 1 dargestellt ist, ein Paar Gleitringe 3, 4, von denen einer, nämlich der Gleitring 3, stationär gegenüber einem Gehäuse 1 gehalten ist, während der andere Gleitring 4 zur gemeinsamen Drehung mit einer Welle 2 verbunden ist. Im Gehäuse 1 ist eine Federvorspanneinrichtung 6 vorgesehen, die auf einen axial beweglich im Gehäuse 1 gehaltenen Druckring 5 wirkt, an dem sich der Gleitring 3 axial abstützt, so dass der Gleitring 3 durch die Vorspannkraft der Federeinrichtung 6 gegen den rotierenden Gleitring 4 gedrückt wird. Der Gleitring 4 ist in geeigneter Weise, z.B. durch einen in einer Nut eines Mitnehmergehäuses 7 einsitzenden O-Ring 9 abgedichtet. Ein schlauchförmiger Mitnehmerring 8 ist zwischen dem Gleitring 4 und einem Montageaufsatz (in der Zeichnung nicht näher gekennzeichnet) auf der Welle 2 vorgesehen, um die Drehung des Montageaufsatzes auf den Gleitring 4 zu übertragen. Der vorbeschriebene Aufbau einer Gleitringdichtungsanordnung ist dem Fachmann bekannt, so dass sich ein Eingehen auf weitere Details erübrigt.

Zur Abdichtung des Druckringes 5 und damit des stationären Gleitringes 3 gegenüber dem Gehäuse 1 ist ein Sekundärdichtungselement vorgesehen, das in Fig. 1 das allgemeine Bezugszeichen 10 trägt und in einer L-förmig geschulterten Aufnahmebohrung 11 im Druckring 5 angeordnet ist:

Fig. 2 zeigt das Sekundärdichtungselement 10 in vergrößertem Masstab. Wie dargestellt, umfasst das Sekundärdichtungselement 10 einen ringförmigen im Querschnitt L-förmig gestalteten Basiskörper 12 aus einem geeigneten nachgiebigen Kunststoffmaterial, wie Polytetrafluoräthylen (PTFE). Der Basiskörper 12 setzt sich zusammen aus einen Basisbereich 13 und einem Dichtungsbereich 14, die axial nebeneinander angeordnet sind und integrale Bestandteile des Basiskörpers 12 darstellen. Der Basisbereich 13 hat einen im Wesentlichen rechteckförmigen massiven Querschnitt, der durch eine äussere, dem Gleitring 3 zugewandte Stirnfläche 15 und eine innere, dem Druckring 5 zugewandte Stirnfläche 16 axial begrenzt ist und eine Durchgangsbohrung 17 mit einer radialen Abmessung D₁ enthält, durch die sich eine am Gehäuse 1 dichtend montierte Hülse 18 hindurcherstreckt. Auf der Hülse 18 sind der Druckring 5 und der Gleitring 3 längsverschiebbar aufgesetzt.

Axial von der inneren Stirnfläche 16 des Basisbereiches 13 ragt nahe der Durchgangsbohrung 17 der Dichtungsbereich 14 ab. Der Dichtungsbereich 14 umfasst ein Paar parallel in radialem Abstand zueinander axial sich erstreckende Stegelemente 19, 20, die zwischen sich einen Ringraum 21 begrenzen. An den Aussenseiten der Stegelemente 19, 20 sind Dichtfächen 22, 23 an kugelkalottenförmigen Auswölbungen vorgesehen.

Die radial innere Dichtfläche 23 des Dichtungsbereiches 14 definiert im unbelasteten Zustand des Sekundärdichtungselementes 5 eine Durchgangsbohrung 31 mit einer radialen Abmessung D₂, die kleiner als die der Durchgangsbohrung 17 ist.

Wie weiter aus Fig. 1 und 2 zu entnehmen ist, kann in dem Ringraum 21 ein Federelement 32 in Gestalt einer U-förmigen Spreizfeder angeordnet sein, die bewirkt, dass die Stegelemente 19, 20 radial voneinander weg gespreizt werden, so dass die Dichtflächen 22, 23 in eine vorbestimmbare feste Anlage mit benachbarten abzudichtenden Oberflächen vorgespannt sind.

In einer Aussparung 24 in der äusseren Stirnfläche 15 des Basisbereiches 13 ist ein Ringscheibenelement 25 mit rechteckförmigem Querschnitt so aufgenommen, dass seine äussere axiale Stirnseite 26 um ein geeignetes geringes Mass die Stirnfläche 15 des Basisbereiches 13 axial überragt. Mit seiner inneren axialen Stirnseite 27 liegt das Ringscheibenelement 25 dichtend an einer benachbarten Oberfläche der Aussparung 24 an. Die Stirnseite 26 steht wenigstens an einem Teilflächenbereich, wie bei 28 angedeutet ist, in dichtendem Eingriff mit einer zugewandten Stirnfläche 29 des Gleitringes 3.

Ein Merkmal des Ringdichtungselementes 25 ist, dass dieses aus einem Kohlenstoffmaterial gebildet ist. Dieses Material zeichnet sich einerseits durch eine gute Elastizität und Formstabilität und damit Dichteigenschaft und andererseits durch ein Wärmeausdehungsverhalten aus, das dem einschlägiger Karbidhartmaterialien, wie Wolframkarbid WC, im Wesentlichen entspricht. Ein geeignetes Kohlenstoffmaterial kann demjenigen entsprechen, wie es für die Ausbildung von Gleitringen von Gleitringdichtungen verwendet wird und in Burgmann Lexikon, ABC der Gleitringdichtung, Selbstverlag 1988, Seite 125 mit weiteren Querverweisen beschrieben ist. Besonders bevorzugt ist so genannte Kunstkohle, siehe Burgmann, Seite 133, a.a.O., die mit Kunstharz oder einem anderen geeigneten Material wie Antimon imprägniert sein kann.

Ein anderes Merkmal des Ringdichtungselementes 25 ist, dass es eine Durchgangsbohrung 30 enthält, durch die die Hülse 18 im unbelasteten Zustand des Ringdichtungselementes 25 mit einem geeigneten Spiel hindurchgeführt werden kann. Die Durchgangsbohrung 30 ist koaxial zur Durchgangsbohrung 17 des Basisbereiches 13 angeordnet und hat eine radiale Abmessung d, die im unbelasteten Zustand des Sekundärdichtungselementes 10 kleiner als die radiale Abmessung D₁ des Basisbereiches 13 ist. Ein weiteres Merkmal des Ringdichtungselementes 25 ist, dass die radiale Abmessung d grösser als diejenige D₂ der Durchgangsbohrung 31 des Dichtungsbereiches 14 im unbelasteten Zustand ist.

Wie ferner Fig. 1 und 2 zu entnehmen ist, wirkt der Druck eines abzudichtenden Mediums, bei dem es sich vorzugsweise, jedoch nicht ausschliesslich, um ein Gas handelt, sowohl radial als auch axial auf das Ringdichtungselement 25, indem das Medium in (in der Zeichnung übertrieben vergrössert dargestellte) Spalte zwischen dem äusseren Umfang des Ringdichtungselementes 25 und dem inneren Umfang der Aussparung 11 als auch zwischen dem Gleitring 3 und der Stirnfläche 26 eindringen kann. Infolge davon erfährt das Ringdichtungselement 25 eine radiale Stauchung, die umso grösser ist, je grösser der anstehende Mediumdruck ist. Dadurch wird das Ringdichtungselement 25 mit zunehmendem Mediumdruck in festerem dichtenden Eingriff mit der benachbarten Oberfläche der Hülse 18 gedrückt, um den radialen Spalt s zwischen dem Gleitring 3 und der Hülse 18 abzudichten. Dabei wird der Dichtungsbereich 14 praktisch druckentlastet. Bei geringeren Mediumdrücken erfolgt dagegen die Abdichtung primär seitens des Dichtungsbereiches 14 durch die Eingriffnahme zwischen dessen radial inneren Dichtfläche 23 mit der Oberfläche der Hülse 18, da hierbei die Anpresskraft auf das Ringdichtungselement 25 infolge der vorerwähnten radialen Abmessungen der Durchgangsbohrungen 30, 31 nicht ausreicht, um eine ausreichende Dichtwirkung zu erzielen. Die radiale Vorspannkraft, mit der die Dichtfläche 23 gegen die Oberfläche der Hülse 18 gepresst ist, kann so eingestellt werden, dass die axiale Beweglichkeit des Druckringes nicht wesentlich beeinträchtigt wird, d.h. definierte radiale Dichtkräfte vorliegen, die keinen unerwünschten "Hang-up-Effekt" bei niedrigen Mediumdrücken bewirken. Diese Beweglichkeit ist auch bei hohen Mediumdrücken wegen der guten tribologischen Eigenschaften des Kohlenstoffmaterials gewährleistet, aus dem das Ringdichtungselement 25 gebildet ist. Durch eine geeignete Dimensionierung der axialen Abmessungen des Ringdichtungselementes 25 kann ebenfalls auf dessen Beweglichkeit Einfluss genommen werden. Gleichzeitig verhindert das Ringdichtungselement 25 unter Hochdruckbedingungen die Gefahr eines Fliessens oder Extrudierens des Materials des Basiskörpers 5 in den Spalt s.

Vorzugsweise sollte die Hülse 18 aus einem verschleissfesten Hartmaterial, wie Wolframkarbid WC, bestehen, das einen ähnlichen Wärmenausdehungskoeffizient wie das Kohlenstoffmaterial des Ringdichtungselementes 25 hat, um thermisch bedingte innere Verspannungen im Ringdichtungselement 25 zu vermeiden.

Vorausgehend wurde die Erfindung anhand einer Ausführungsform beschrieben, bei der das Ringdichtungselement gleichzeitig eine axiale und radiale Abdichtung bewirken kann. Die Erfindung ist hierauf jedoch nicht eingeschränkt, sondern umfasst eine Anordnung, bei der das Ringdichtungselement nur eine radiale Dichtfunktion erfüllt, indem es gänzlich innerhalb der Umrisslinien des Basiskörpers angeordnet ist. Der Aufbau des Dichtungsbereiches ist auf das Vorsehen radial spreizbarer Stegelemente nicht beschränkt. Der Dichtungsbereich könnte z.B. auch als Labyrinthdichtung oder als einfache Lippendichtung ausgebildet sein. Schliesslich kann das erfindungsgemässe Sekundärdichtungselement sowohl zum Einsatz in Verbindung mit dem stationären als auch rotierenden Gleitring vorgesehen sein. Obschon die Verwendung eines Kohlenstoffmaterials bevorzugt wird, sind unter dem Begriff "Kohlenstoffmaterial" auch andere geeignete Materialien mit gleichen oder ähnlichen Eigenschaften als eingeschlossen anzusehen.

## Patentansprüche

1. Sekundärdichtungselement mit einem Basiskörper (12) aus einem Kunststoffmaterial, der einen Basisbereich (13) und einen Dichtungsbereich (14) umfasst, die jeweils koaxial ausgerichtete axial nebeneinander liegende Durchgangsbohrungen (17,31) für die Durchführung eines Bauteils aufweisen, und einem am Basisbereich (13) anliegenden Ringscheibenelement (25) mit einer koaxial zu den Durchgangsbohrungen des Basis- und Dichtungsbereiches ausgerichteten Durchgangsbohrung (30) aus einem Material, das sich von dem des Basiskörpers unterscheidet, wobei im unbelasteten Zustand die Durchgangsbohrung (30) des Ringscheibenelementes (25) eine radiale Abmessung d hat, die grösser als diejenige D₂ der Durchgangsbohrung (31) des Dichtungsbereiches (14) und kleiner als diejenige D₁ des Basisbereiches (13) des Basiskörpers (12) ist, **dadurch gekennzeichnet, dass** das aus einem Kohlenstoffmaterial bestehende Ringscheibenelement in einer Aussparung (24) in einer Stirnseite des Basisbereiches (13) so aufgenommen ist, dass es die Stirnseite um ein geringes Mass axial überragt und auf einen äusseren Umfang des Ringscheibenelementes (25) unter dem Druck eines abzudichtenden Mediums eine radiale Kraft ausübbar ist.

2. Sekundärdichtungselement nach Anspruch 1, **dadurch gekennzeichnet, dass** das Kunststoffmaterial des Basiskörpers (12) PTFE umfasst.

3. Sekundärdichtungselement nach Anspruch 1 oder 2, **dadurch gekennzeichnet, dass** der Dichtungsbereich (14) ein Paar radial beabstandete federnde Stegelemente (19,20) mit entgegengesetzt nach aussen gerichteten Dichtflächen (22,23) umfasst.

4. Sekundärdichtungselement nach Anspruch 3, **gekennzeichnet durch** eine Einrichtung (32) zur federnden radialen Spreizung der Stegelemente (19,20).

5. Sekundärdichtungselement nach einem der vorhergehenden Ansprüche, **dadurch gekennzeichnet, dass** der Basisbereich (13) einen im Wesentlichen rechteckförmigen Querschnitt hat.

6. Gleitringdichtungsanordnung mit einem Paar zusammenwirkender Gleitringe (3,4), von denen einer mit einer axialen Vorspannkraft in Richtung auf den anderen beaufschlagt und axial beweglich auf einer Hülse (18) angeordnet ist, wobei zur Abdichtung des einen Gleitringes (3) gegenüber der Hülse (18) ein Sekundärdichtungselement (10) in einem auf der Hülse axial beweglich aufgesetzten Druckring (5) zur Übertragung der Vorspannkraft vorgesehen ist, welches Sekundärdichtungselement einen Basiskörper (12) aus einem Kunststoffmaterial, der einen Basisbereich (13) und einen Dichtungsbereich (14) umfasst, die jeweils koaxial ausgerichtete axial nebeneinander liegende Durchgangsbohrungen (17,31) für die Durchführung eines Bauteils aufweisen, und ein im Basisbereich (13) aufgenommenes Ringscheibenelement (25) mit einer koaxial zu den Durchgangsbohrungen des Basis- und Dichtungsbereiches ausgerichteten Durchgangsbohrung (30) aus einem Material umfasst, das sich von dem des Basiskörpers unterscheidet, wobei im unbelasteten Zustand die Durchgangsbohrung (30) des Ringscheibenelementes (25) eine radiale Abmessung d hat, die grösser als diejenige D₂ der Durchgangsbohrung (31) des Dichtungsbereiches (14) und kleiner als diejenige D₁ des Basisbereiches (13) des Basiskörpers (12) ist, **dadurch gekennzeichnet, dass** das aus einem Kohlenstoffmaterial bestehende Ringscheibenelement in einer Aussparung (24) in einer Stirnseite des Basisbereiches (13) so aufgenommen ist, dass es die Stirnseite um ein geringes Mass axial überragt und auf einen äusseren Umfang des Ringscheibenelementes (25) unter dem Druck eines abzudichtenden Mediums eine radiale Kraft ausübbar ist, wobei die Hülse (18) aus einem Material mit einem Wärmeausdehungskoeffizient gebildet ist, der im Wesentlichen dem des Kohlenstoffmaterials des Ringscheibenelementes (25) entspricht.

7. Gleitringdichtungsanordnung nach Anspruch 6, **dadurch gekennzeichnet, dass** die Hülse (18) aus Wolframkarbid gebildet ist.

## Claims

1. A secondary seal element including a base body (12) made of a synthetic material, said base body comprising a base portion (13) and a seal portion (14), which respectively comprise coaxially aligned, axially adjacent through bores (17, 31) for the passage of a component, and an annular disc element (25) abutting at said base portion (13) and including a through bore (30) coaxially aligned with the through bores in the base and seal portions, said annular disc element being formed of a material which differs from that of the base body, wherein in the unloaded state, the through bore (30) of said annular disc element (25) has a radial dimension d which is greater than that D2 of the through bore (31) of said seal portion (14) and smaller than that D1 of said base portion (13) of the base body (12), **characterized in that** the annular disc element consisting of a carbon material is received in a recess (24) in a front face of the base portion (13) such that it projects axially beyond the front face by a small amount and a radial force can be applied onto an outer periphery of the annular disc element (25) under the pressure of a medium to be sealed.

2. The secondary seal element according to claim 1, **characterized in** hat the synthetic material of the base body (12) comprises PTFE.

3. The secondary seal element according to claim 1 or 2, **characterized in that** the seal portion (14) comprises a pair of radially spaced resilient web elements (19, 20) having opposed outwardly directed sealing surfaces (22, 23).

4. The secondary seal element according to claim 3, **characterized by** means (32) for radially expanding the web elements (19, 20) in a resilient manner.

5. The secondary seal element according to one of the preceding claims, **characterized in that** the base portion (13) has an essentially rectangular cross section.

6. A mechanical seal assembly comprising a pair of cooperating seal rings (3, 4) of which one is urged towards the other by an axial bias force and is axially moveably disposed on a sleeve (18), wherein for the purpose of sealing said one sealing seal ring (3) with respect to the sleeve (18), a secondary sealing element (10) is provided in a thrust ring (5) seated on the sleeve in axially moveable manner for transmitting said bias force, which secondary seal element comprises a base body (12) made of a synthetic material, said base body comprising a base portion (13) and a seal portion (14), which respectively comprise coaxially aligned, axially adjacent through bores (17, 31) for the passage of a component, and an annular disc element (25) received in said base portion (13) and including a through bore (30) coaxially aligned with the through bores in the base and seal portions, said annular disc element being formed of a material which differs from that of the base body, wherein in the unloaded state, the through bore (30) of said annular disc element (25) has a radial dimension d which is greater than that D2 of the through bore (31) of said seal portion (14) and smaller than that D1 of said base portion (13) of the base body (12), **characterized in that** the annular disc element consisting of a carbon material is received in a recess (24) in a front face of the base portion (13) such that it projects axially beyond the front face by a small amount and a radial force can be applied onto an outer periphery of the annular disc element (25) under the pressure of a medium to be sealed, wherein the sleeve (18) is formed of a material having a coefficient of thermal expansion which essentially corresponds to that of the carbon material of the annular disc element (25).

7. The mechanical seal assembly according to claim 6, **characterized in that** the sleeve (18) is formed of tungsten carbide.

## Revendications

1. Elément d'étanchéité secondaire avec un corps de base (12) en matière plastique pourvu d'une région de base (13) et d'une région d'étanchéité (14) qui présentent des perçages traversants respectifs ( 17, 31) axialement juxtaposés et orientés coaxialement, pour le passage d'une pièce, et avec un élément en forme de couronne (25) appliqué contre la région de base (13) et pourvu d'un perçage traversant (30) orienté coaxialement aux perçages traversants de la région de base et de la région d'étanchéité et constitué d'une matière différente de celle du corps de base, sachant que dans l'état non sollicité, le perçage traversant (30) de l'élément en forme de couronne (25) possède une dimension radiale (d) qui est supérieure à celle (D₂) du perçage traversant (31) de la région d'étanchéité (14) et inférieure à celle (D₁) de la région de base (13) du corps de base (12), **caractérisé en ce que** l'élément en forme de couronne, constitué d'un matériau à base de carbone, est reçu dans un évidement (24) dans un côté frontal de la région de base (13) de telle sorte qu'il dépasse axialement du côté frontal dans une faible mesure et qu'une force radiale peut, sous la pression d'un fluide à étancher, être exercée sur un pourtour extérieur de l'élément en forme de couronne (25).

2. Elément d'étanchéité secondaire selon la revendication 1, **caractérisé en ce que** la matière plastique du corps de base (12) comprend du polytétrafluoréthylène (PTFE).

3. Elément d'étanchéité secondaire selon la revendication 1 ou 2, **caractérisé en ce que** la région d'étanchéité (14) comprend une paire d'éléments en forme de branches élastiques (19, 20) radialement distants, pourvus de faces d'étanchéité (22, 23) dirigées vers l'extérieur dans des directions opposées.

4. Elément d'étanchéité secondaire selon la revendication 3, **caractérisé par** un dispositif (32) pour l'écartement radial élastique des éléments en forme de branches (19, 20).

5. Elément d'étanchéité secondaire selon l'une des revendications précédentes, **caractérisé en ce que** la région de base (13) possède une section essentiellement rectangulaire.

6. Garniture mécanique d'étanchéité avec une paire d'anneaux de glissement coopérants (3, 4), dont l'un est sollicité en direction de l'autre avec une force de précontrainte axiale et est disposé axialement mobile sur une douille (18), sachant que pour l'étanchement de l'un (3) des anneaux de glissement par rapport à la douille (18), il est prévu un élément d'étanchéité secondaire (10) dans une bague de pression (5) montée axialement mobile sur la douille pour transmettre la force de précontrainte, lequel élément d'étanchéité secondaire est doté d'un corps de base (12) en matière plastique comportant une région de base (13) et une région d'étanchéité (14) qui présentent des perçages traversants respectifs (17, 31) axialement juxtaposés et orientés coaxialement, pour le passage d'une pièce, et d'un élément en forme de couronne (25) reçu dans la région de base (13) et pourvu d'un perçage traversant (30) orienté coaxialement aux perçages traversants de la région de base et de la région d'étanchéité et constitué d'une matière différente de celle du corps de base, sachant que dans l'état non sollicité, le perçage traversant (30) de l'élément en forme de couronne (25) possède une dimension radiale (d) qui est supérieure à celle (D₂) du perçage traversant (31) de la région d'étanchéité (14) et inférieure à celle (D₁) de la région de base (13) du corps de base (12), **caractérisée en ce que** l'élément en forme de couronne, constitué d'un matériau à base de carbone, est reçu dans un évidement (24) dans un côté frontal de la région de base (13) de telle sorte qu'il dépasse axialement du côté frontal dans une faible mesure et qu'une force radiale peut, sous la pression d'un fluide à étancher, être exercée sur un pourtour extérieur de l'élément en forme de couronne (25), sachant que la douille (18) est constituée d'un matériau ayant un coefficient de dilatation thermique qui correspond sensiblement à celui du matériau à base de carbone de l'élément en forme de couronne (25).

7. Garniture mécanique d'étanchéité selon la revendication 6, **caractérisée en ce que** la douille (18) est réalisée en carbure de tungstène.
